# EUROPÄISCHE PATENTSCHRIFT

(11) **EP 0 719 390 B1**
(45) Veröffentlichungstag und Bekanntmachung des Hinweises auf die Patenterteilung: **05.03.1997**
(21) Anmeldenummer: 94926088.9
(22) Anmeldetag: 02.09.1994
(51) Int. Cl.: F16D 41/20, F16D 13/08, F16D 3/72

(54) **SCHLINGFEDERKUPPLUNGFÜRZWEI FLUCHTENDE WELLEN**
WRAP SPRING CLUTCH FOR TWO ALIGNED SHAFTS
ACCOUPLEMENT PAR RESSORT ENROULE POUR DEUX ARBRES EN ALIGNEMENT

(30) Priorität: 17.09.1993 DE 4332142
(43) Veröffentlichungstag der Anmeldung: 03.07.1996
(73) Patentinhaber: SIEMENS AKTIENGESELLSCHAFT, 80333 München (DE)
(72) Erfinder: GODESA, Ludvik, D-10777 Berlin (DE)
(86) Internationale Anmeldenummer: DE9401038
(87) Internationale Veröffentlichungsnummer: WO9508068

(56) Entgegenhaltungen:
- DE-A- 1 450 224
- DE-C- 112 158
- DE-C- 680 803
- FR-A- 2 354 479
- US-A- 2 566 539

## Beschreibung

Die Erfindung betrifft eine Schlingfederkupplung für zwei fluchtende Wellen, mit denen jeweils ein Buchsenkörper verbunden ist, die durch eine Schlingfeder und eine zwischen der Schlingfeder und den Buchsenkörpern angeordnete radial geteilte Kupplungsmanschette überbrückt sind.

Eine Schlingfederkupplung der genannten Art ist durch die US-A-2 566 539 bekannt geworden. Die Kupplungsmanschette ist dabei als ringförmiger Körper ausgebildet, der aufgrund von axialen Einschnitten eine radiale Federung aufweist oder mittels durchgehender Trennschnitte in mehrere Teilstücke unterteilt ist.

Der Erfindung liegt die Aufgabe zugrunde, das mittels einer Schlingfederkupplung der genannten Art übertragbare Drehmoment trotz Verwendung einer einfachen und daher preiswerten Schlingfeder zu vergrößern.

Diese Aufgabe wird gemäß der Erfindung dadurch gelöst, daß jeder der beiden Buchsenkörper eine im Querschnitt etwa keilförmige Umfangsnut besitzt und daß die Kupplungsmanschette für jeder der Umfangsnuten mit einem Vorsprung entsprechender Querschnittsform versehen ist.

Die genannte Gestaltung der Buchsenkörper und der Kupplungsmanschette hat neben einer Vergrößerung des übertragbaren Drehmomentes bei gegebenen Eigenschaften der Schlingfeder die weitere vorteilhafte Eigenschaft, daß die Buchsenkörper gegeneinander axial ausgerichtet werden und somit die Schlingfederkupplung ein zusammenhängendes Bauelement bildet, welches mit den vorhandenen fluchtenden Wellen gekuppelt werden kann.

Als vorteilhaft erweist es sich in diesem Zusammenhang, wenn jede der axial außenliegenden Begrenzungsflächen der beiden keilförmigen Umfangsnuten radial verlaufend angeordnet ist. Hierdurch entfällt einerseits jeder axiale Zwischenraum zwischen den Buchsenkörpern und der Kupplungsmanschette, wodurch eine durchgehende Auflagefläche für die Schlingfeder gebildet wird. Andererseits erleichtert es die radiale Lage der außenliegenden Begrenzungsflächen der keilförmigen Umfangsnuten eine vorgegebene axiale Erstreckung der Schlingfederkupplung maßgenau einzuhalten.

Für die Verbindung der Schlingfederkupplung mit den fluchtenden Wellen besteht eine vorteilhafte Möglichkeit darin, daß jeder der beiden Buchsenkörper mit der zugehörigen Welle durch einen Querbolzen verbunden ist und daß der Querbolzen über den Umfang der Buchsenkörper vorstehend bemessen ist und als axiale Sicherung der Schlingfeder wirkt.

Eine andere geeignete Möglichkeit zur axialen Festlegung der Schlingfeder besteht darin, daß wenigstens der eine der Buchsenkörper eine Umfangsnut zum Eingreifen wenigstens einer Windung der Schlingfeder besitzt.

Die Erfindung wird im folgenden anhand der in den Figuren dargestellen Ausführungsbeispiele näher erläutert.

Die Figur 1 zeigt ein erstes Beispiel einer Schlingfederkupplung teilweise in Ansicht und teilweise im axialen Schnitt.

Die Figur 2 zeigt ein weiteres Ausführungsbeispiel, gleichfalls teilweise in Ansicht und teilweise im axialen Schnitt.

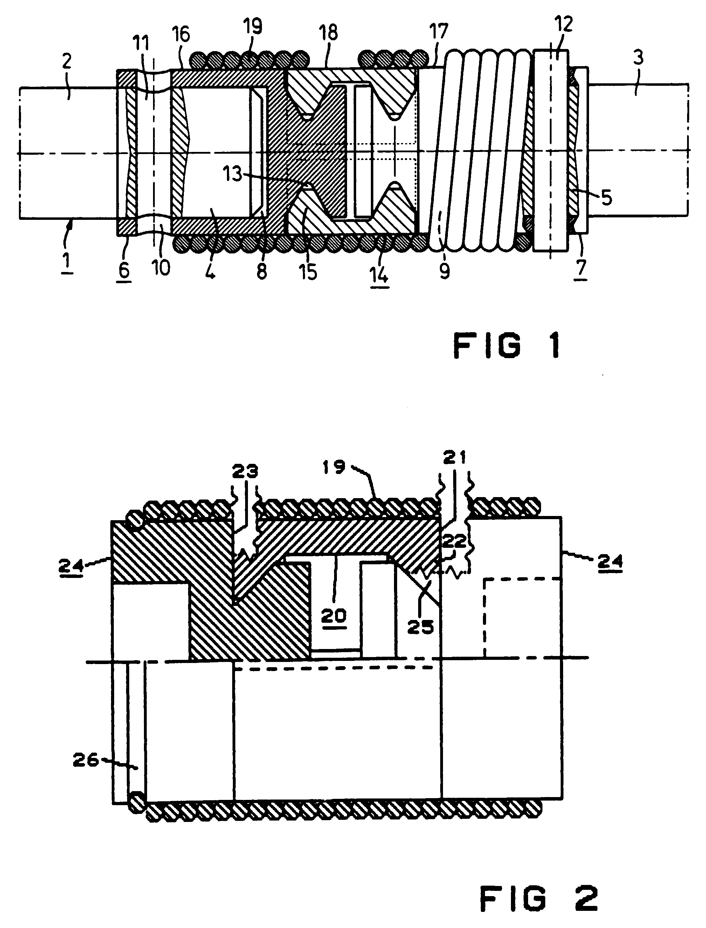

Eine in der Figur 1 gezeigte Schlingfederkupplung 1 verbindet eine abgebrochen gezeigte Welle 2 mit einer mit der Welle 2 fluchtenden, gleichfalls abgebrochen dargestellten Welle 3. Auf den Enden 4 bzw. 5 der Wellen 2 und 3 sitzt je ein Buchsenkörper 6 bzw. 7, der eine Aufnahmeöffnung 8 bzw. 9 für das betreffende Ende 4 bzw. 5 der Wellen 2 und 3 aufweist. Die Buchsenkörper 6 und 7 sowie die zugehörigen Enden 4 und 5 der Wellen 2 und 3 besitzen Querbohrungen 10 und 11 für je einen Querbolzen, von denen ein Querbolzen 12 im rechten Teil der Figur 1 gezeigt ist.

Die einander zugewandten Enden der Buchsenkörper 6 und 7 stehen einander mit geringem Abstand gegenüber und sind mit je einer etwa V-förmigen Nut 13 versehen. Eine Kupplungsmanschette 14, die radial einfach oder mehrfach geteilt sein kann, greift mit Vorsprüngen 15 in die Nuten 13 ein. Die Umfangsflächen 16 und 17 der Wellen 2 und 3 bzw. der beiden Buchsenkörper 6 und 7 sowie eine Stützfläche 18 der Kupplungsmanschette 14 fluchten miteinander und sind von einer als Abschnitt einer normalen runddrähtigen Schraubenfeder ausgebildeten Schlingfeder 19 umschlossen. Je nach dem Windungssinn der Schlingfeder 19 bewirkt eine Drehung der Welle 2 oder 3 im Uhrzeigersinn oder entgegen dem Uhrzeigersinn eine Mitnahme der jeweils anderen Welle dadurch, daß sich die Schlingfeder 19 infolge der Mitnahme durch Reibung an den Umfangsflächen 16 und 17 der Buchsenkörper zusammenzieht und hierdurch eine radial nach innen gerichtete Kraft entsteht, mit der als Steuergröße die Kupplungsmanschette 14 beaufschlagt wird. Durch den Neigungswinkel der Nuten 13 und den entsprechenden Neigungswinkel der Vorsprünge 15 hat es der Konstrukteur in der Hand, die Höhe des übertragbaren Drehmomentes als Funktion der Steuergröße zu bestimmen. Im Unterschied hierzu wird bei den bekannten Schlingfederkupplungen das Drehmoment durch die Schlingfeder selbst übertragen.

Die Schlingfeder 19 ist, wie bereits erwähnt, ein Abschnitt einer standardmäßigen Schraubenfeder. Gegen axiale Verschiebung ist die Schlingfeder 19 dadurch gesichert, daß die Querbolzen 12 über den Umfang der Buchsenkörper 6 und 7 überstehend bemessen ist. Auf eine andere Gestaltungsmöglichkeit wird anhand der Figur 2 noch eingegangen.

Zunächst sei anhand der Figur 2 eine andere Gestaltung der Nuten und Vorsprünge betrachtet. Wie man erkennt, liegt eine abgewandelt ausgebildete Kupplungsmanschette 20 mit eine radialen Endflächen 21 ihrer Vorsprünge 22 an gleichfalls radial verlaufenden Begrenzungsflächen 23 eines abgewandelten Buchsenkörpers 24 an. Anschließend an die Endflächen 21 und die Begrenzungsfläche 23 verlaufen eine Umfangsnut 25 des Buchsenkörpers 24 und die Vorsprünge 22 der Kupplungsmanschette 20 geneigt zur gemeinsamen Längsachse der zu kuppelnden Wellen. Die Wirkung ist die gleiche wie in dem Beispiel gemäß der Figur 1, wobei jedoch der Vorteil einer genaueren axialen Positionierung der Buchsenkörper gegeben ist. Auch entfällt jeglicher axiale Zwischenraum zwischen der Kupplungsmanschette 20 und den Buchsenkörpern 24, was günstig für die Funktion der Schlingfeder 19 ist.

Der Figur 2 ist noch zu entnehmen, daß die Schlingfeder trotz des Wegfalls der Querstifte gleichfalls gegen axiale Verschiebung gesichert ist, und zwar durch eine in dem einen Buchsenkörper 24 eingearbeitete Nut 26 für die letzte Windung der Schlingfeder 19.

## Patentansprüche

1. Schlingfederkupplung (1) für zwei fluchtende Wellen (2, 3), mit denen jeweils ein Buchsenkörper (6, 7; 24) verbunden ist, die durch eine Schlingfeder (19) und eine zwischen der Schlingfeder (19) und den Buchsenkörpern (6, 7; 24) angeordnete radial geteilte Kupplungsmanschette (14; 20) überbrückt sind,
**dadurch gekennzeichnet,** daß jeder der beiden Buchsenkörper (6, 7; 24) eine im Querschnitt etwa keilförmige Umfangsnut (13; 25) besitzt und daß die Kupplungsmanschette (14; 20) für jede der Umfangsnuten (13; 25) mit einem Vorsprung (15; 22) entsprechender Querschnittsform versehen ist.

2. Schlingfederkupplung nach Anspruch 1,
**dadurch gekennzeichnet,** daß die axial außenliegende Begrenzungsfläche (23) jeder der beiden keilförmigen Umfangsnuten (25) radial verlaufend angeordnet ist.

3. Schlingfederkupplung nach Anspruch 1 oder 2,
**dadurch gekennzeichnet,** daß jeder der beiden Buchsenkörper (6, 7) mit der zugehörigen Welle (2, 3) durch einen Querbolzen (12) verbunden ist und daß der Querbolzen (12) über den Umfang der Buchsenkörper (6, 7) vorstehend bemessen ist und als axiale Sicherung der Schlingfeder (19) wirkt.

4. Schlingfederkupplung nach einem der vorangehenden Ansprüche,
**dadurch gekennzeichnet,** daß wenigstens der eine der Buchsenkörper (24) eine Umfangsnut (26) zum Eingreifen wenigstens einer Windung der Schlingfeder (19) besitzt.

## Claims

1. Wrap spring clutch (1) for two aligned shafts (2, 3), to each of which a bush body (6, 7; 24) is connected and which are bridged by a wrap spring (19) and a radially divided coupling sleeve (14; 20) disposed between the wrap spring (19) and the bush bodies (6, 7; 24), characterized in that each of the two bush bodies (6, 7; 24) has a circumferential groove (13; 25) of a roughly wedge-shaped cross-section and that the coupling sleeve (14; 20) is provided with a projection (15; 22) of a corresponding cross-sectional shape for each of the circumferential grooves (13; 25).

2. Wrap spring clutch according to claim 1, characterized in that the axially external boundary area (23) of each of the two wedge-shaped circumferential grooves (25) is disposed running radially.

3. Wrap spring clutch according to claim 1 or 2, characterized in that each of the two bush bodies (6, 7) is connected to the accompanying shaft (2, 3) by a transverse bolt (12) and that the transverse bolt (12) is dimensioned protrudingly above the circumference of the bush bodies (6, 7) and has the effect of securing the wrap spring (19) axially.

4. Wrap spring clutch according to one of the preceding claims, characterized in that at least one of the bush bodies (24) has a circumferential groove (26) for engaging at least one coil of the wrap spring (19).

## Revendications

1. Accouplement par ressort enroulé (1) pour deux arbres (2, 3) en alignement, auxquels est associé respectivement une douille (6, 7 ; 24) et qui sont reliés par un ressort enroulé (19) et par un manchon d'accouplement (14 ; 20) fendu radialement disposé entre le ressort enroulé (19) et les douilles (6, 7 ; 24), caractérisé en ce que chacune des deux douilles (6, 7 ; 24) comporte une rainure périphérique (13 ; 25) de section transversale sensiblement en forme de coin et en en ce que le manchon d'accouplement (14 ; 20) est pourvu d'une saillie (15 ; 22) de forme de section transversale correspondante pour chacune des rainures périphériques (13 ; 25).

2. Accouplement par ressort enroulé selon la revendication 1, caractérisé en ce que la surface de délimitation (23) située axialement à l'extérieur de chacune des deux rainures périphériques (25) en forme de coin est disposée de manière à s'étendre dans le sens radial.

3. Accouplement par ressort enroulé selon la revendication 1 ou 2, caractérisé en ce que chacune des deux douilles (6, 7) est reliée à l'arbre associé (2, 3) par l'intermédiaire d'un axe transversal (12) et en ce que l'axe transversal (12) a des dimensions telles qu'il dépasse de la périphérie des douilles (6, 7) et sert ainsi à bloquer axialement le ressort enroulé (19).

4. Accouplement par ressort enroulé selon l'une quelconque des revendications précédentes, caractérisé en ce qu'au moins l'une des douilles (24) comporte une rainure périphérique (26), dans laquelle pénètre au moins une spire du ressort enroulé (19).
